# EUROPEAN PATENT SPECIFICATION

(11) **EP 3 806 700 B1**
(45) Date of publication and mention of the grant of the patent: **26.06.2024**
(21) Application number: 19728381.5
(22) Date of filing: 29.05.2019
(51) Int. Cl.: A47J 31/18, A47J 31/44

(54) **A COFFEE MACHINE**
KAFFEEMASCHINE
CAFETIÈRE

(30) Priority: 18.06.2018 TR 201808594
(43) Date of publication of application: 21.04.2021
(73) Proprietor: Arçelik Anonim Sirketi, 34445 Istanbul (TR)
(72) Inventor: KUYUMCU, Arda, 34950 ISTANBUL (TR); KARAAGAC, Emre, 34950 ISTANBUL (TR); AYAROGLU, Emre, 34950 ISTANBUL (TR); COKER, Nazli Ecem, 34950 ISTANBUL (TR); ALPTEKIN, Ahmet, 34950 ISTANBUL (TR)
(86) International application number: PCT/EP2019/063992
(87) International publication number: WO 2019/243012

(56) References cited:
- EP-A1- 2 454 977
- WO-A1-2004/023949
- WO-A1-2007/071567
- DE-B3-102006 043 903
- US-B1- 8 061 263

## Description

The present invention relates to a coffee machine capable of cooking Turkish coffee. Traditional Turkish coffee is preferably cooked in copper cooking pots to distribute heat equally. The amount of heat transmitted to coffee during cooking significantly affects the taste of Turkish coffee. Therefore, when cooked for only one serving, i.e. for one cup, the taste of Turkish coffee cooked in a large cooking pot is not identical to the taste of Turkish coffee cooked in a small cooking pot even when a copper cooking pot is used. Therefore, Turkish coffee connoisseurs use cooking pots of different sizes depending on the amount of coffee to be cooked. In automatic Turkish coffee machines, preferably a large-sized cooking container, i.e. cooking pot is used, and it is not possible to use cooking containers of different sizes due to the sensors detecting whether coffee is cooked. Because, the utilized sensors are calibrated according to a cooking container of a specific size and using different sized cooking containers lead to erroneous measurements, causing under- or over-cooking of coffee. Another reason restricting usage of cooking containers of different sizes is that, due to their optical nature, sensors cannot measure in a single direction and they have to measure in an area expanding direct proportionally to distance. Likewise, in coffee machines automatically transmitting water to the cooking container by means of a nozzle group, water output angles of the nozzles are set according to a specific cooking container and when for example a smaller-sized cooking container is used, a part of water may be sprayed out of the cooking container.

State of the art international patent application no. WO2007071567 discloses a coffee machine in which a fixed-sized cooking container is used, comprising an infrared level sensor.

State of the art international patent application no. WO2004069013 discloses a coffee machine in which a fixed-sized cooking container is used, comprising nozzles enabling transmitting water to the cooking container.

State of the art Greek patent application no. GR870927 discloses a coffee machine having a fixed-sized cooking container.

State of the art International patent application no. WO2004023949 discloses a dispensing device for drinks or similar dosable liquid foodstuffs, especially coffee, milk, soft drinks or soups.

The aim of the present invention is to realize a coffee machine enabling using cooking containers of different sizes.

The coffee machine realized to achieve the aim of the present invention comprises the features of ndependent claim 1. Preferred embodiments of the coffee machine according to the invention are claimed in the dependent claims. The coffee machine of the invention comprises a movement mechanism enabling changing the level in vertical direction of an arm covering the cooking container in which coffee is cooked, and comprising therein a nozzle group enabling transmitting water into the cooking container and a sensor group enabling measuring the level of coffee in the cooking container. The movable structure of the arm enables a user to use a small cooking container when he/she desires to cook a single cup of coffee and to use a large cooking container which is taller than the small cooking container, when he/desires to cook a higher number of cups of coffee on the same coffee machine.

In an embodiment of the invention, the changing of the level of the arm in vertical direction is realized by the user. The user can adjust the height of the arm as desires, according to the utilized cooking container. This embodiment eliminates the necessity of using a movement mechanism with complex components to change the height of the arm, increasing the range of freedom given to the user by making the arm height-adjustable also in a low-cost coffee machine.

In a different embodiment of the invention, the position of the arm can be changed between heights predetermined by the producer. In this embodiment, the producer enables the height of the arm to be changed in intervals of for example 1 cm, enabling the user to use cooking containers of different sizes. The arm is enabled to be movable by a simple and low-cost mechanical structure as noted above.

In a different embodiment of the invention, the movement mechanism has a torsion spring enabling the arm to be moved in two separate heights. The arm can be used in two separate positions by using two separate stable balance points available with the torsion spring.

In a different embodiment of the invention, the movement mechanism comprises a rack and pinion gear provided in the coffee machine body, and the height of the arm can be changed by means of a motor rotating the pinion gear. The position of the arm can thus be changed fully automatically or upon triggering of the user.

In a different embodiment of the invention, a sensor is used in the coffee machine, detecting whether the cooking container could enter in between the body and the arm. When the user approaches the cooking container to the coffee machine, the sensor detects the cooking container and determines whether the cooking container can fit in the gap between the body and the arm.

In a different embodiment of the invention, the movement mechanism changes the height of the arm according to a signal received from the sensor. This enables preventing the cooking container from colliding the coffee machine when the user is attempting to place the cooking container.

In a different embodiment of the invention, the coffee machine comprises an alert means enabling alerting the user in case the sensor detects that the cooking container is not able to fit in between the arm and the body. The alert means enables the user to be alerted visually and/or audibly.

According to the invention, in addition to changing the height of the arm, the movement mechanism enables changing the positions on horizontal plane of the nozzle group and the sensor group provided in the arm. This enables the nozzle group and the sensor group to be adjusted so as to correspond to the cooking container on it in coffee machine in which the heater enabling heating the coking container, covers the entire surface. In a version of this embodiment, the nozzle group and the sensor group are moved collectively, and the user or a motorized movement mechanism does not have to adjust said groups individually. In another version of this embodiment, the user changes the positions on horizontal plane of the nozzle group and the sensor group, enabling users to use the above-mentioned features also in low-cost products. In another version of this embodiment, the nozzle group and the sensor group are movable between positions predetermined by the producer.

In a different embodiment of the invention, the movement mechanism adjusts the height of the arm to the highest position possible, after completion of each cooking process. This enables preventing users from colliding the coking container to the coffee machine, in coffee machines not utilizing the sensor enabling detecting whether the cooking container could fit in between the arm and the body.

In a different embodiment of the invention, the heater is an induction heater, and the movement mechanism changes the height of the arm and/or the positions of the nozzle group and the sensor group by using the information regarding the cooking container size which the induction coil obtains by inducing the cooking container. By this, required adjustments can be made fully automatically in the coffee machine enabling using different sized cooking containers.

In a different embodiment of the invention, the sensor group has a time of flight sensor. The height and the position on horizontal plane of the cooking container are determined by the time of flight sensor, and the movement mechanism adjusts the height of the arm and the positions of the nozzle group and the sensor group so as to be optimized with respect to the cooking container. When the user places a cooking container of any size on the coffee machine, the movement mechanism first detects the position on horizontal plane of the cooking container by changing the position on horizontal plane of the sensor group, i.e. of the time of flight sensor. Since the arm is at the highest possible position, the sensor group does not collide or contact the cooking container during the above-mentioned motion. After determining the horizontal position of the cooking container, the movement mechanism adjusts the height of the arm so as to be optimized with respect to the cooking container according to data received from the time of flight sensor. The coffee machine becomes fully automatic with this embodiment, improving the perceived quality.

The movement mechanism of the invention, enabling changing the height of the arm, enables the user to use cooking containers of a desired size in all coffee machines, from cheaper to more expensive models. Turkish coffee connoisseurs in particular are thus enabled to cook coffee of identical taste every time.

The cooking container realized to achieve the aims of the present invention is illustrated in the accompanying drawings, wherein:

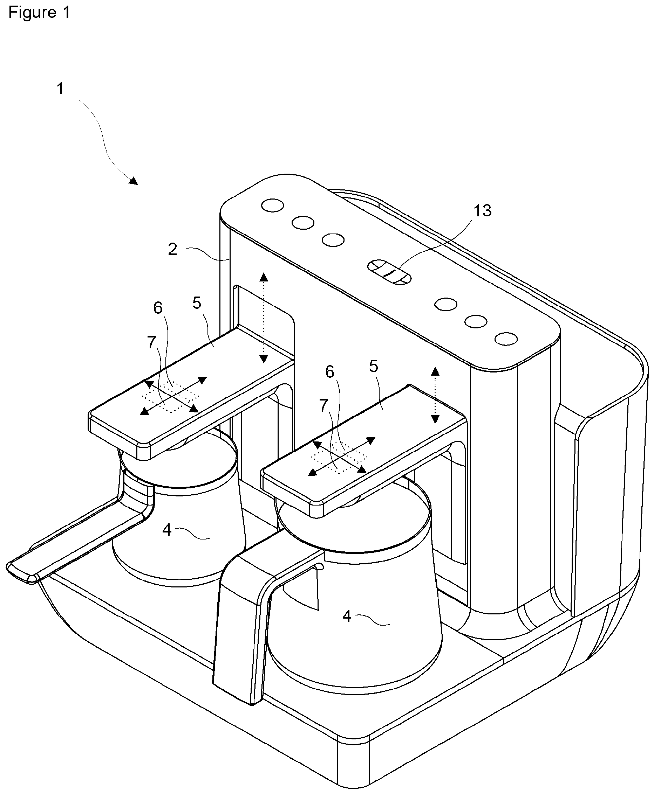

Figure 1 is a perspective view of a coffee machine.

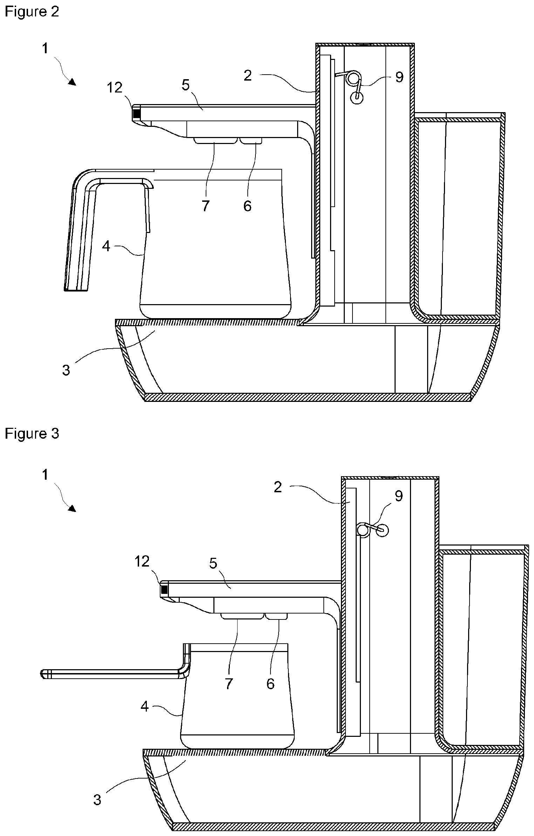

Figure 2 is a schematic side view of a coffee machine having a torsion spring, in which a large-sized cooking container is used.
Figure 3 is a schematic side view of a coffee machine having a torsion spring, in which a small-sized cooking container is used.

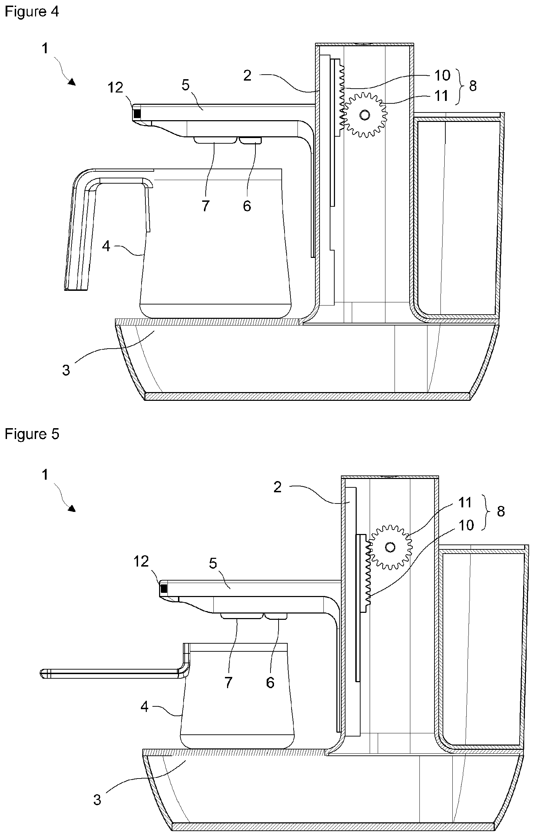

Figure 4 is a schematic side view of a coffee machine having a rack, in which a large-sized cooking container is used.
Figure 5 is a schematic side view of a coffee machine having a rack, in which a small-sized cooking container is used.

The elements in the figures are numbered individually and the correspondence of these numbers are given hereinafter.
1. Coffee machine
2. Body
3. Heater
4. Cooking container
5. Arm
6. Nozzle group
7. Sensor group
8. Movement mechanism
9. Torsion spring
10. Rack
11. Pinion gear
12. Sensor
13. Alert means

The coffee machine (1) comprises a body (2), a heater (3) provided in the body (2), enabling the cooking process to be realized, a cooking container (4) in which the cooking process is performed, an arm (5) extending outwards from the body (2) so as to cover the cooking container (4) when the cooking container (4) is placed on the heater (3), a nozzle group (6) provided in the arm (5), enabling transmitting water to the cooking container (4), and a sensor group (7) provided in the arm (5), enabling detecting the liquid level in the cooking container (4). The user adds materials such as coffee and sugar to the cooking container (4), then places the cooking container (4) on the heater (3) and starts the cooking process. The nozzle group (6) provided on the arm (5) enables pumping water into the cooking container (4), and the sensor group (7) enables measuring the level of coffee being cooked in the cooking container (4).

The coffee machine (1) of the invention comprises a movement mechanism (8) enabling changing the level of the arm (5) in vertical direction, or in other terms, changing its height in gravity direction. The arm (5) is connected to the body (2) by means of the movement mechanism (8) and thus gains the capability of moving in gravitational force direction, i.e. vertical direction. The movement mechanism (8) can thus change the height of the arm (5) when the user wishes to use cooking containers (4) of different heights. In different embodiments of the invention, the coffee machine (1) may comprise a plurality of heaters (3) so as to be able to cook coffee simultaneously in a plurality of cooking containers (4). In such embodiments, there may be a large monolithic arm (5) covering a plurality of cooking containers (4), as well as a plurality of arms (5) each of which individually covers one of the cooking containers (4). The purpose of the invention is the arm (5) which covers any cooking container (4), being height-adjustable, and structural differences are not of importance provided that the purpose of the invention is fulfilled.

In another embodiment of the invention, the height of the arm (5) can be changed by a user. Height adjustment of the arm (5) is left to the user, enabling the user to use a cooking container (4) of a desired size. Furthermore, cost advantage is provided by the height of the arm (5) being manually adjustable and by using a mechanical structure without employing any electronic component.

In another embodiment of the invention, the arm (5) is movable between a plurality of heights predetermined by the producer. The producer enables the arm (5) to move only between predetermined heights so as to conform to cooking containers (4) of commercially available sizes, and the user can thus conveniently determine the height of the arm (5). In this embodiment, the motion of the arm (5) is enabled in a low cost manner by means of a simple mechanical structure.

In another embodiment of the invention, the movement mechanism (8) comprises a torsion spring (9) enabling changing the height of the arm (5) in vertical direction and having stable balance points corresponding to two separate predetermined heights of the arm (5). When it is desired to change the height of the arm (5), the torsion spring (9) moves from one of its stable balance points towards the other upon the arm (5) being moved upwards or downwards, enabling the arm (5) to rest stationary on its other height. When the torsion spring (9) is in one of its stable balance points, it stably retains the arm (5) on a given height, and small forces acting on the arm (5) fail to change the height of the arm (5) as the balance point is stable.

In a different embodiment of the invention, the movement mechanism (8) comprises a rack (10) provided in the body (2) in connection with the arm (5), and a pinion gear (11) provided in the body (2) so as to rotate on the rack (10) and actuated by means of a motor (not shown in the figures). This embodiment enables the arm (5) to be maintained stationary on any height, enabling using cooking containers (4) of any size to be used in the coffee machine (1). The arm (5) connected to the rack (10) moves upwards or downwards upon the pinion gear (11) being rotated by the motor. In this embodiment, the user may trigger activation of the motor or this may be performed automatically as explained below.

In a different embodiment of the invention, the coffee machine (1) comprises a sensor (12) provided on the front portion of the arm (5), detecting whether the cooking container (4) approached towards the body (2) fits in between the body (2) and the arm (5). The sensor (12) is provided on the front portion of the arm (5), or in other terms, on the portion of the arm (5) facing the user when the user stands opposite the coffee machine (1) to use it. The sensor (12) may be a proximity sensor disposed on the front portion of the arm (5). In this case, if the sensor (12) detects the cooking container (4) when the user approaches the cooking container (4) towards the body (2), this implies that the cooking container (4) could not fit in between the arm (5) and the body (2), and if it does not detect, this implies that the cooking container (4) could fit in between the arm (5) and the body (2). The sensor (12) may be a sensor of any type known in the art. The perceived quality of the coffee machine (1) is improved with this embodiment.

In a different embodiment of the invention, the movement mechanism (8) enables changing the height of the arm (5) according to data received from the sensor (12). Depending on data from the sensor (12), the movement mechanism (8) changes the height of the arm (5) in case the cooking container (4) could not fit in between the arm (5) and the body (2), enabling the user to place the cooking container (4). For example, when the user approaches the coffee machine (1) with the cooking container (4), if the sensor (12) which is a proximity sensor provided on the front portion of the arm (5), detects the cooking container (4), the movement mechanism (8) activates the motor, enabling elevating the arm (5), and continues elevating the arm (5) until the sensor (12) does not detect the cooking container (4). Height adjustment of the arm (5) is thus performed fully automatically.

In a different embodiment of the invention, the coffee machine (1) comprises an alert means (13) enabling alerting the user upon the sensor (12) detecting that the approaching cooking container (4) could not fit in between the arm (5) and the body (2). Particularly in embodiments with a movement mechanism (8) lacking a motor, if the cooking container (4) could not fit in between the arm (5) and the body (2), the user is alerted by the alert means (13), preventing the user from inadvertently colliding the cooking container (4) on the coffee machine (1).

In the invention, the movement mechanism (8) enables changing the positions of the nozzle group (6) and the sensor group (7) along the front-rear and right-left directions perpendicular to each other on the horizontal plane which is perpendicular to the direction of gravity. This enables the user to place the cooking container (4) wherever he/she wishes on the body (2), enhancing the range of freedom provided to the user. The length of the hoses (not shown in the figures) conveying water to the nozzle group (6) and of the wires enabling electrical connection of the sensor group are opted so as not to inhibit movement of the nozzle group (6) and the sensor group (7) in the arm (5), enabling actuating the nozzle group (6) and the sensor group (7). The user enables the nozzle group (6) and the sensor group (7) to correspond to the cooking container (4) on it by using the movement mechanism (8). In different versions of this embodiment, the movement mechanism (8) is able to automatically actuate the nozzle group (6) and the sensor group (7) so as to correspond to the cooking container (4) on it independently of the user. Quality of the coffee machine (1) is improved by this embodiment which can be used particularly in coffee machines (1) in which the heater (39) covers the entire surface on which the cooking container (4) is placed.

In a different embodiment of the invention, the positions of the nozzle group (6) and the sensor group (7) are changed collectively by the movement mechanism (8). This embodiment eliminates the necessity for the user to individually adjust the nozzle group (6) and the sensor group (7) so as to correspond to the coking container (4) on it, and both groups (6, 7) can change their positions collectively by a single action.

In a different embodiment of the invention, the positions on horizontal plane of the nozzle group (6) and the sensor group (7) can be changed by the user. In this embodiment, the user provides the motion as explained above, enabling using a movable nozzle group (6) and sensor group (7) also in low-cost coffee machines (1).

In a different embodiment of the invention, the nozzle group (6) and the sensor group (7) are movable between positions predetermined by the producer. Mobility is provided with low-cost as explained in the embodiment in which the arm (5) is movable between predetermined heights.

In a different embodiment of the invention, the movement mechanism (8) enables the arm (5) to be brought to the highest predetermined position after completion of each cooking process. This embodiment prevents the user from inadvertently colliding the cooking container (4) to the coffee machine (1). After completion of the cooking process, the movement mechanism (8) activates the motor to bring the arm (5) to the highest predetermined height. By this, the arm (5) does not inhibit the user when the user intends to place the cooking container (4) on the body (2), regardless of the cooking container size. After placement of the cooking container (4), the movement mechanism (8) is triggered by the user or by the sensor group (7), and adjusts the height of the arm (5) to bring it to the most suitable position for the placed cooking container (4).

In a different embodiment of the invention, the coffee machine (1) comprises an induction heater (3) and a cooking container (4) made of ferromagnetic material, and the movement mechanism (8) adjusts the height of the arm (5) and/or the positions of the nozzle group (6) and the sensor group (7) according to data received from the induction coil (not shown in the figures). The induction coil is able to detect the position on the body (2), of the cooking container (4) made of ferromagnetic material. In addition, the amplitude of the signal to pass through the induction coil varies according to the size of the cooking container (4). Therefore, the induction coil is able to almost detect the height of the cooking container (4) by inducing the ferromagnetic cooking container (4). The movement mechanism (8) adjusts the height of the arm (5) to the most appropriate position according to the detected height. Likewise, the positions on horizontal plane of the nozzle group (6) and the sensor group (7) are adjusted so as to correspond to the cooking container (4) on it according to detected position thereof.

In another embodiment of the invention, the sensor group (7) is a time of flight sensor, and the movement mechanism (8) adjusts the height of the arm (5) and/or the positions of the nozzle group (6) and the sensor group (7) according to data received from the sensor group (7). An object's position on horizontal plane and height on vertical plane can be detected by means of a time of flight sensor. The movement mechanism (8) first moves the sensor group (7) on horizontal plane, attempting to find the position on horizontal plane of the cooking container (4), and after determining the position of the cooking container (4), the movement mechanism (8) adjusts the height of the arm (5) so as to conform the height of the cooking container (4). This embodiment provides great convenience to users who sometimes wish to cook coffee with different cooking containers (4), and the coffee machine (1) makes all adjustments automatically, including of the cooking process. In different versions of the embodiment, the data obtained by using the induction coil of the above-disclosed embodiment, can be controlled and improved by using the sensor group (7) additionally.

The present invention provides a movable arm (5) in the coffee machine (1), giving the user the freedom to use cooking containers (4) of different sizes. It is thus avoided the obligation of the user to use a single type of cooking container (4) due to not being able to use cooking pots of different sizes in currently available coffee machines (1), enabling achieving the desired coffee consistence and taste every time. As explained in various embodiments of the invention, the arm (5) can be actuated by the user in a low-cost manner or fully automatically.

## Claims

1. A coffee machine (1) **comprising** a body (2), a heater (3) provided in the body (2) and configured to enable the cooking process to be realized, a cooking container (4) in which the cooking process is performed, an arm (5) extending outwards from the body (2) so as to cover the cooking container (4) when the cooking container (4) is placed on the heater (3), a nozzle group (6) provided in the arm (5) and configured to transmit water to the cooking container (4), and a sensor group (7) provided in the arm (5) and configured to detect the liquid level in the cooking container (4), a movement mechanism (8) further configured to enable changing the level of the arm (5) in vertical direction wherein the movement mechanism (8) is further configured to enable changing the positions of the nozzle group (6) and the sensor group (7) along the front-rear and right-left directions perpendicular to each other on the horizontal plane which is perpendicular to the direction of gravity.

2. A coffee machine (1) according to claim 1, **characterized in that** the height of the arm (5) can be manually changed by the user.

3. A coffee machine (1) according to claim 1 or 2, **characterized by** the arm (5) being movable between a plurality of different heights predetermined by the producer.

4. A coffee machine (1) according to any one of the preceding claims, **characterized by** the movement mechanism (8) comprising a torsion spring (9) enabling changing the height of the arm (5) in vertical direction and having stable balance points corresponding to two different predetermined heights of the arm (5).

5. A coffee machine (1) according to claim 1, **characterized by** the movement mechanism (8) comprising a rack (10) provided in the body (2) in connection with the arm (5), and a pinion gear (11) provided in the body (2) so as to rotate on the rack (10) and actuated by means of a motor.

6. A coffee machine (1) according to claim 5 **characterized by** the movement mechanism (8) being configured to enable changing the height of the arm (5) according to data received from the sensor (12).

7. A coffee machine (1) according to claim 6, **characterized by** an alert means (13) configured to enable alerting the user upon the sensor (12) detecting that the approaching cooking container (4) could not fit in between the arm (5) and the body (2).

8. A coffee machine (1) according to any one of the preceding claims,**characterized by** the movement mechanism (8) being configured to allow changing collectively the positions of the nozzle group (6) and the sensor group (7).

9. A coffee machine (1) according to any one of the preceding claims, **characterized in that** the positions on the horizontal plane of the nozzle group (6) and the sensor group (7) can be changed by the user.

10. A coffee machine (1) according to claim 9, **characterized by** the nozzle group (6) and the sensor group (7) being movable between positions predetermined by the producer.

11. A coffee machine (1) according to claim 10, **characterized in that** the heater is an induction heater (3), the cooking container (4) is made of ferromagnetic material, and **in that** the movement mechanism (8) is configured to adjust the height of the arm (5) and/or the positions of the nozzle group (6) and the sensor group (7) according to data received from the induction coil.

12. A coffee machine (1) according to claim 10 or 11, **characterized by** the sensor group (7) which is a time of flight sensor, and by the movement mechanism (8) adjusting the height of the arm (5) and/or the positions of the nozzle group (6) and the sensor group (7) according to data received from the sensor group (7).

## Patentansprüche

1. Eine Kaffeemaschine (1) **umfasst** einen Körper (2), eine Heizvorrichtung (3), die in dem Körper (2) vorgesehen und so gestaltet ist, dass sie die Durchführung des Kochvorgangs ermöglicht, einen Kochbehälter (4), in dem der Kochvorgang durchgeführt wird, einen Arm (5), der sich von dem Körper (2) nach außen erstreckt, um den Kochbehälter (4) zu bedecken, wenn der Kochbehälter (4) auf die Heizvorrichtung (3) gestellt wird, eine Düsengruppe (6), die in dem Arm (5) vorgesehen und so gestaltet ist, dass sie Wasser zu dem Kochbehälter (4) überträgt und eine Sensorgruppe (7), die in dem Arm (5) vorgesehen und so konfiguriert ist, dass sie den Flüssigkeitspegel in dem Kochbehälter (4) erfasst, einen Bewegungsmechanismus (8), der weiterhin so konfiguriert ist, dass er eine Änderung des Pegels des Arms (5) in vertikaler Richtung ermöglicht, wobei der Bewegungsmechanismus (8) weiterhin so konfiguriert ist, dass er eine Änderung der Positionen der Düsengruppe (6) und der Sensorgruppe (7) entlang der Vorne-Hinten- und der Rechts-Links-Richtung rechtwinklig zueinander auf der horizontalen Ebene, die rechtwinklig zu der Richtung der Schwerkraft ist, ermöglicht.

2. Eine Kaffeemaschine (1), wie in Anspruch 1 aufgeführt, **ist dadurch gekennzeichnet, dass** die Höhe des Arms (5) durch den Benutzer manuell verändert werden kann.

3. Eine Kaffeemaschine (1), wie in Anspruch 1 oder 2 aufgeführt, **ist dadurch gekennzeichnet, dass** der Arm (5) zwischen einer Vielzahl unterschiedlicher, vom Hersteller vorgegebener Höhen beweglich ist.

4. Eine Kaffeemaschine (1), wie in einem der vorherigen Ansprüchen aufgeführt, **ist dadurch gekennzeichnet, dass** der Bewegungsmechanismus (8) eine Torsionsfeder (9) umfasst, die es ermöglicht, die Höhe des Arms (5) in vertikaler Richtung zu verändern, und stabile Gleichgewichtspunkte aufweist, die zwei verschiedenen vorgegebenen Höhen des Arms (5) entsprechen.

5. Eine Kaffeemaschine (1), wie in Anspruch 1 aufgeführt, **ist dadurch gekennzeichnet, dass** der Bewegungsmechanismus (8) eine Zahnstange (10), die in dem Körper (2) in Verbindung mit dem Arm (5) vorgesehen ist, und ein Ritzel (11) umfasst, das in dem Körper (2) so vorgesehen ist, dass es sich auf der Zahnstange (10) dreht und mittels eines Motors betätigt wird.

6. Eine Kaffeemaschine (1), wie in Anspruch 5 aufgeführt, **ist dadurch gekennzeichnet, dass** der Bewegungsmechanismus (8) so konfiguriert ist, dass er eine Änderung der Höhe des Arms (5) entsprechend den vom Sensor (12) empfangenen Daten ermöglicht.

7. Eine Kaffeemaschine (1), wie in Anspruch 6 aufgeführt, **ist dadurch gekennzeichnet, dass** ein Warnmittel (13) so konfiguriert ist, dass es den Benutzer warnt, wenn der Sensor (12) feststellt, dass der sich nähernde Kochbehälter (4) nicht zwischen den Arm (5) und den Körper (2) passt.

8. Eine Kaffeemaschine (1), wie in einem der vorherigen Ansprüchen aufgeführt, **ist dadurch gekennzeichnet, dass** der Bewegungsmechanismus (8) so konfiguriert ist, dass er eine gemeinsame Änderung der Positionen der Düsengruppe (6) und der Sensorgruppe (7) ermöglicht.

9. Eine Kaffeemaschine (1), wie in einem der vorherigen Ansprüchen aufgeführt, **ist dadurch gekennzeichnet, dass** die Positionen der Düsengruppe (6) und der Sensorgruppe (7) in der horizontalen Ebene durch den Benutzer verändert werden können.

10. Eine Kaffeemaschine (1), wie in Anspruch 9 aufgeführt, **ist dadurch gekennzeichnet, dass** die Düsengruppe (6) und die Sensorgruppe (7) zwischen vom Hersteller vorgegebenen Positionen bewegbar sind.

11. Eine Kaffeemaschine (1), wie in Anspruch 10 aufgeführt, **ist dadurch gekennzeichnet, dass** der Heizer ein Induktionsheizer (3) ist, ein Kochbehälter (4) aus ferromagnetischem Material besteht und dass der Bewegungsmechanismus (8) so konfiguriert ist, dass er die Höhe des Arms (5) und/oder die Positionen der Düsengruppe (6) und der Sensorgruppe (7) entsprechend den von der Induktionsspule empfangenen Daten einstellt.

12. Eine Kaffeemaschine (1), wie in Anspruch 10 oder 11 aufgeführt, **ist dadurch gekennzeichnet, dass** die Sensorgruppe (7), die ein Flugzeitsensor ist, und durch den Bewegungsmechanismus (8) die Höhe des Arms (5) und/oder die Positionen der Düsengruppe (6) und der Sensorgruppe (7) entsprechend den von der Sensorgruppe (7) empfangenen Daten einstellt.

## Revendications

1. Une machine à café (1) **comprenant** un corps (2), un chauffe-eau (3) disposé dans le corps (2) et conçu pour permettre la réalisation du processus de cuisson, un récipient de cuisson (4) dans lequel le processus de cuisson est effectué, un bras (5) s'étendant vers l'extérieur à partir du corps (2) de manière à recouvrir le récipient de cuisson (4) lorsque celui-ci est placé sur le chauffe-eau (3), un groupe de buses (6) disposé dans le bras (5) et configuré pour transmettre de l'eau au récipient de cuisson (4), et un groupe de capteurs (7) disposé dans le bras (5) et configuré pour détecter le niveau de liquide dans le récipient de cuisson (4), un mécanisme de mouvement (8) configuré en outre pour permettre de changer le niveau du bras (5) dans une direction verticale, le mécanisme de mouvement (8) étant en outre configuré pour permettre de changer les positions du groupe de buses (6) et du groupe de capteurs (7) le long des directions avant-arrière et droite-gauche perpendiculaires entre elles sur le plan horizontal qui est perpendiculaire à la direction de la gravité.

2. Une machine à café (1) selon la revendication 1, **caractérisée en ce que** la hauteur du bras (5) peut être modifiée manuellement par l'utilisateur.

3. Une machine à café (1) selon la revendication 1 ou 2, **caractérisée par le fait que** le bras (5) est mobile entre une pluralité de hauteurs différentes prédéterminées par le fabricant.

4. Une machine à café (1) selon l'une quelconque des revendications précédentes, **caractérisée en ce que** le mécanisme de mouvement (8) comprend un ressort de torsion (9) permettant de modifier la hauteur du bras (5) dans la direction verticale et ayant des points d'équilibre stables correspondant à deux hauteurs prédéterminées différentes du bras (5).

5. Une machine à café (1) selon la revendication 1, **caractérisée en ce que** le mécanisme de mouvement (8) comprend une crémaillère (10) disposée dans le corps (2) en connexion avec le bras (5), et un pignon (11) disposé dans le corps (2) de manière à tourner sur la crémaillère (10) et actionné au moyen d'un moteur.

6. Une machine à café (1) selon les revendications 5, **caractérisée en ce que** le mécanisme de mouvement (8) est configuré pour permettre de changer la hauteur du bras (5) en fonction des données reçues du capteur (12).

7. Une machine à café (1) selon la revendication 6, **caractérisée par** un moyen d'alerte (13) configuré pour permettre d'alerter l'utilisateur lorsque le capteur (12) détecte que le récipient de cuisson (4) approchant ne pourrait pas s'insérer entre le bras (5) et le corps (2).

8. Une machine à café (1) selon l'une quelconque des revendications précédentes, **caractérisée en ce que** le mécanisme de mouvement (8) est configuré pour permettre de changer collectivement les positions du groupe de buses (6) et du groupe de capteurs (7).

9. Une machine à café (1) selon l'une quelconque des revendications précédentes, **caractérisée en ce que** les positions sur le plan horizontal du groupe de buses (6) et du groupe de capteurs (7) peuvent être modifiées par l'utilisateur.

10. Une machine à café (1) selon la revendication 9, **caractérisée en ce que** le groupe de buses (6) et le groupe de capteurs (7) sont mobiles entre des positions prédéterminées par le fabricant.

11. Une machine à café (1) selon la revendication 10, **caractérisée en ce que** le chauffe-eau est un chauffe-eau à induction (3), un récipient de cuisson (4) est en matériau ferromagnétique, et **en ce que** le mécanisme de mouvement (8) est configuré pour ajuster la hauteur du bras (5) et/ou les positions du groupe de buses (6) et du groupe de capteurs (7) en fonction des données reçues de la bobine d'induction.

12. Une machine à café (1) selon la revendication 10 ou 11, **caractérisée par** le groupe de capteurs (7) qui est un capteur de temps de vol, et par le mécanisme de mouvement (8) ajustant la hauteur du bras (5) et/ou les positions du groupe de buses (6) et du groupe de capteurs (7) en fonction des données reçues du groupe de capteurs (7).
